# FASCICULE DE BREVET EUROPEEN

(11) **EP 3 913 390 B1**
(45) Date de publication et mention de la délivrance du brevet: **16.09.2026**
(21) Numéro de dépôt: 21174707.6
(22) Date de dépôt: 19.05.2021
(51) Int. Cl.: G01S 5/02, G01S 5/14

(54) **PROCÉDÉS DE GÉOLOCALISATION D'UN RÉCEPTEUR ET D'UN SYSTÈME DE GÉOLOCALISATION, ET RÉCEPTEUR ET SYSTÈME DE GÉOLOCALISATION COMPORTANT UN TEL RÉCEPTEUR ASSOCIÉS**
VERFAHREN ZUR GEOLOKALISIERUNG EINES EMPFÄNGERS UND EINES GEOLOKALISIERUNGSSYSTEMS SOWIE ENTSPRECHENDER EMPFÄNGER UND ENTSPRECHENDES GEOLOKALISIERUNGSSYSTEM, DAS EINEN SOLCHEN EMPFÄNGER UMFASST
METHODS FOR POSITIONING A RECEIVER AND A GEOPOSITIONING SYSTEM, AND ASSOCIATED RECEIVER AND GEOPOSITIONING SYSTEM COMPRISING SUCH A RECEIVER

(30) Priorité: 19.05.2020 FR 2005061
(43) Date de publication de la demande: 24.11.2021
(73) Titulaire: THALES, 92400 Courbevoie (FR)
(72) Inventeur: HEURGUIER, Dominique, 92622 GENNEVILLIERS CEDEX (FR)
(74) Mandataire: Lavoix

(56) Documents cités:
- MADADI ZAHRA ET AL: "Receiver Tracking Using Signals of Opportunity from Asynchronous RF Beacons in GNSS-Denied Environments", 2016 IEEE 84TH VEHICULAR TECHNOLOGY CONFERENCE (VTC-FALL), IEEE, 18 September 2016 (2016-09-18), pages 1 - 5, XP033079012, DOI: 10.1109/VTCFALL.2016.7881191
- ALEXANDER ENS ET AL: "Unsynchronized ultrasound system for TDOA localization", 2014 INTERNATIONAL CONFERENCE ON INDOOR POSITIONING AND INDOOR NAVIGATION (IPIN), 1 October 2014 (2014-10-01), pages 601 - 610, XP055217486, ISBN: 978-1-46-738054-6, DOI: 10.1109/IPIN.2014.7275533
- GHOLAMI M. R. ET AL: "TDOA Based Positioning in the Presence of Unknown Clock Skew", IEEE TRANSACTIONS ON COMMUNICATIONS., vol. 61, no. 6, 1 June 2013 (2013-06-01), PISCATAWAY, NJ. USA., pages 2522 - 2534, XP055775900, ISSN: 0090-6778, DOI: 10.1109/TCOMM.2013.032013.120381

## Description

La présente invention concerne des procédés de géolocalisation d'un récepteur et d'un système de géolocalisation.

La présente invention concerne également un récepteur et un système de géolocalisation comportant un tel récepteur.

Le domaine de l'invention est celui de géolocalisation dans un environnement, par exemple d'une personne munie d'un récepteur en absence de système global de positionnement, par exemple en absence des signaux GPS.

Cela est par exemple le cas de certains espaces fermés lorsque les signaux issus d'un tel système global ne peuvent pas parvenir le récepteur.

Cela est également le cas lorsque les signaux issus d'un système de positionnement global sont perturbés ou alors sont brouillés, par exemple de manière volontaire.

Bien entendu, à la place de la personne, toute autre entité mécanique ou encore un animal dont la géolocalisation est nécessaire dans l'environnement peut être envisagée.

Dans l'état de la technique, plusieurs méthodes permettant de géolocaliser un récepteur en absence de système global de positionnement existent déjà. De telles méthodes sont par exemple décrites dans Madadi Zahra et al: « Receiver Tracking Using Signais of Opportunity from Asynchronous RF Beacons in GNSS-Denied Environments » et Alexander Ens et al: « Unsynchronized ultrasound system for TDOA localization ».

Parmi d'autres méthodes, on connait notamment des méthodes de radiolocalisation basées sur des balises préinstallées et géoréférencées lors de la pose dans l'environnement.

La localisation du récepteur peut être obtenue en analysant les instants d'arrivée de différents signaux radioélectriques issus de ces balises. Une telle technique est connue dans l'état de la technique sous le terme de « TDOA » (de l'anglais « *Time Difference Of Arrival »).*

Selon d'autres méthodes connues de l'état de la technique, il est possible de géolocaliser un récepteur dans un tel environnement en utilisant des mesures de distance entre le récepteur et des différentes balises préinstallées également dans l'environnement.

Il est également possible dans le cas de déplacement de plusieurs récepteurs, de mettre en œuvre une géolocalisation de chacun d'entre eux par mesure de distances relatives entre ces récepteurs.

Toutefois, les deux types de méthodes précités se trouvent inadaptés pour des environnements contraignants.

En particulier, il est clair que dans certains environnements, tels que par exemple des environnements de guerre, le récepteur ne doit pas être détecté par un système externe et ne doit pas à cet effet émettre de signaux radioélectriques.

Dans un tel cas, la géolocalisation par calcul de distance entre le récepteur et des balises ou encore entre plusieurs récepteurs reste impossible.

En effet, il existe deux stratégies : la mesure de distance par trajet aller-retour et la mesure de distance sur un seul trajet « aller ».

Pour une mesure de distance par trajet aller-retour, le récepteur doit pouvoir émettre des signaux vers des balises ou vers d'autres récepteurs.

Pour une mesure de distance par trajet aller simple, la mise en œuvre de la technique de radiolocalisation en mesurant les instants d'arrivée des signaux issus de différentes balises, se trouve également difficilement réalisable.

En effet, pour pouvoir définir la position du récepteur de manière certaine, il est nécessaire que les horloges des différentes balises ainsi que l'horloge du récepteur soient synchronisées entre elles. Cela n'est pas possible avec les horloges embarquées actuelles étant donné que la précision de ces horloges ne permet pas d'éviter de dérives relatives entre elles.

Le but de la présente invention est donc de permettre une géolocalisation d'un récepteur dans des environnements contraignants, dans lesquels la réception de signaux externes n'est pas possible et dans lesquels le récepteur doit se déplacer de manière discrète, c'est-à-dire sans être détecté par un système tiers.

À cet effet, l'invention concerne un procédé de géolocalisation d'un récepteur, conforme à la revendication 1.

Suivant d'autres aspects avantageux de l'invention, le procédé de géolocalisation comprend une ou plusieurs des caractéristiques des revendications 2 à 6.

La présente invention a également pour objet un procédé de géolocalisation d'un système de géolocalisation, conforme à la revendication 7.

La présente invention a également pour objet un récepteur comprenant des moyens techniques configurés pour mettre en œuvre le procédé de géolocalisation de ce récepteur tel que défini ci-dessus.

La présente invention a également pour objet un système de géolocalisation comprenant un récepteur mobile dans un environnement et M balises disposées dans l'environnement, le système étant configuré pour mettre en œuvre le procédé de géolocalisation d'un tel système, tel que défini précédemment.

Ces caractéristiques et avantages de l'invention apparaitront dans la lecture de la description qui va suivre, donnée uniquement à titre d'exemple non limitative, et faite en référence aux dessins annexés sur lesquels :
- la figure 1 est une vue schématique d'un système de géolocalisation selon l'invention, le système de géolocalisation comprenant un récepteur selon l'invention et une pluralité de balises ;
- la figure 2 présente dans sa partie gauche un organigramme du procédé de géolocalisation du système de géolocalisation de la figure 1 et dans sa partie droite un organigramme du procédé de géolocalisation du récepteur de la figure 1.

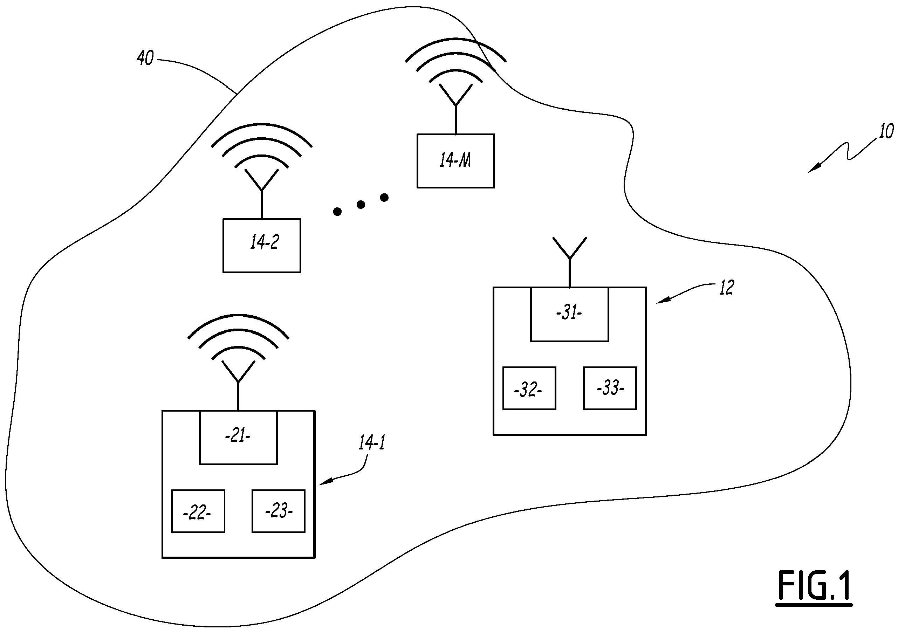

La figure 1 illustre en effet un système de géolocalisation 10 selon l'invention.

Ce système de géolocalisation 10 comprend un récepteur 12 et M balises 14-1 à 14-M, le nombre M étant supérieur ou égal à 3.

Les balises 14-1 à 14-M sont par exemple sensiblement identiques. Ainsi, par la suite, seule la balise 14-1 sera expliquée en détail.

Comme cela est illustré sur la figure 1, la balise 14-1 comprend un module de réception/émission de signaux radioélectriques 21, un module de traitement 22 et une horloge 23. Ces composantes de la balise 14-1 sont par exemple comprises dans un boitier muni d'une batterie et permettant le fonctionnement autonome de cette balise dans un environnement donné.

Le module de réception/émission de signaux radioélectriques 21 présente par exemple une antenne apte à communiquer avec les modules de réception/émission des signaux radioélectriques des autres balises 14-1 à 14-M pour échanger des signaux radioélectriques.

Le module d'émission/réception de signaux radioélectriques 21 est apte en outre à émettre des signaux radioélectriques qui sont destinés à être reçus par toute autre unité électronique et notamment par le récepteur 12 comme cela sera expliqué par la suite.

Le module de traitement 22 est apte à déterminer une localisation de la balise 14-1, notamment une localisation bidimensionnelle relative, en analysant des signaux radioélectriques reçus de la part des autres balises 14-2 à 14-M comme cela sera expliqué également par la suite.

Le module de traitement 22 est apte en outre à déterminer des signaux radioélectriques à émettre par le module de réception/émission 21 selon une périodicité T donnée.

Ces signaux à émettre comprennent notamment une information de navigation comprenant la localisation de la balise 14-1 lorsqu'elle est déterminée et un identifiant de celle-ci.

L'identifiant de la balise 14-1 présente par exemple un numéro ou une suite alphanumérique qui permet d'identifier de manière unique la balise 14-1 parmi les autres balises du système 10.

L'horloge 23 permet au module de traitement 22 de décompter la valeur T correspondant à la périodicité d'émission des signaux radioélectriques comprenant l'information de navigation.

La précision de l'horloge 23 est connue en avance.

Ainsi, comme cela est connu dans l'état de la technique, l'horloge 23 peut être de bonne précision ou de haute précision.

En particulier, par « horloge de bonne précision », on entend par exemple une horloge de précision d'ordre de 10 ppb avec par exemple la stabilité inférieure à 1 ppb.

Par « horloge de haute précision », on entend par exemple une horloge de précision inférieure à 1 ppb et par exemple, de stabilité inférieure à 0,1 ppb.

Par « ppb », on entend l'unité de mesure connue sous le terme de « partie par milliard ».

L'homme du métier comprendra que les valeurs de précision et de stabilité de données ci-dessus pour définir les différents types d'horloge peuvent varier en fonction des différentes applications du système 10.

Dans un exemple de réalisation, chacune des balises 14-1 à 14-M comprend en outre un module barométrique permettant de déterminer l'altitude de la balise correspondante. Le module de traitement 22 correspondant peut alors utiliser les mesures fournies par ce module barométrique avec les signaux radioélectriques issus des autres balises pour déterminer une localisation tridimensionnelle de la balise.

Selon encore un exemple de réalisation, les modules de réception/émission 21 d'au moins deux balises 14-1 à 14-M permettent en outre de recevoir des signaux radioélectriques issus d'un système global de positionnement, par exemple d'un système global de positionnement par satellites. Dans ce cas, les modules de traitement 22 de ces balises sont adaptés pour déterminer une localisation absolue de la balise correspondante. De plus, dans ce cas, cette localisation absolue peut être partagée avec les autres balises de sorte que chacune d'entre elles devient apte à déterminer sa localisation absolue.

Le récepteur 12 comprend un module de réception 31, un module de traitement 32 et une horloge 33.

Le module de réception 31 présente par exemple une antenne apte à recevoir des signaux radioélectriques, notamment les signaux radioélectriques issus des balises 14-1 à 14-M lorsque ces balises se trouvent dans un rayon de couverture de l'antenne.

Le module de traitement 32 permet de déterminer la localisation du récepteur 12 en utilisant des signaux radioélectriques et notamment des informations de navigation transportées par les signaux radioélectriques issus des balises 14-1 à 14-M, comme cela sera expliqué par la suite.

L'horloge 33 est par exemple analogue à l'horloge 23 décrite précédemment en relation avec la balise 14-1.

En particulier, tout comme l'horloge 23, l'horloge 33 peut être qualifiée de bonne précision ou de haute précision.

Comme dans le cas précédent, les mêmes valeurs de précision et de stabilité peuvent être utilisées pour qualifier l'horloge 33 de bonne précision ou de haute précision. Par la suite, il sera considéré que l'horloge 33 présente la même précision que les horloges 23 des balises.

Le récepteur 12 est configuré pour être porté par un porteur qui présente une personne ou un dispositif mécanique ou un animal.

Le récepteur 12 peut alors présenter un boitier adapté à cet effet avec une batterie correspondante.

Selon un autre exemple de réalisation, le récepteur 12 est intégré dans une autre entité physique existante comme par exemple un téléphone mobile ou tout autre dispositif électronique.

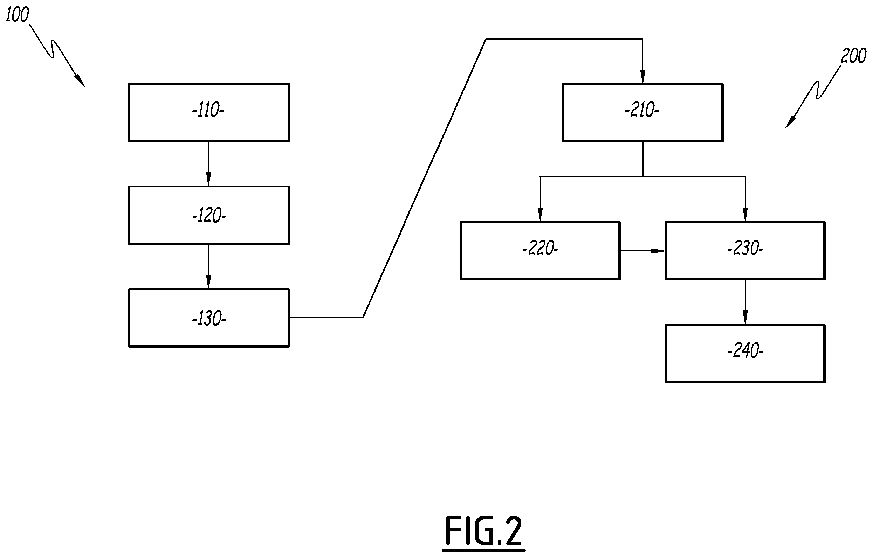

Les procédés de géolocalisation du système de géolocalisation 10 et du récepteur 12 seront désormais expliqués en référence à la figure 2 présentant les organigrammes de ces procédés. Ces procédés seront désignés par la suite respectivement par les références numériques « 100 » et « 200 »,

Tout d'abord, il est considéré que le système de géolocalisation 10 est déployé dans un environnement 40 visible sur la figure 1.

Il est considéré également que cet environnement 40 ne permet pas au récepteur 12 de déterminer sa localisation en utilisant un système global de positionnement, par exemple par satellites.

Il est considéré également que les balises 14-1 à 14-M sont disposées dans l'environnement 40 dans des déplacements non connus a priori. Autrement dit, ces balises 14-1 à 14-M ne sont pas géolocalisées a priori.

Ces balises peuvent par exemple être disposées par une personne, par exemple la personne portant le récepteur 12, pour permettre la géolocalisation du porteur dans l'environnement 40 ou par tout autre moyen adapté.

Finalement, il est considéré que les balises 14-1 à 14-M sont disposées de manière consécutive l'une après l'autre selon un sens particulier.

Ainsi, par exemple, dans le cas de trois balises, la personne dispose d'abord la balise 14-1 ensuite la balise 14-2 et ensuite la balise 14-3 en suivant le sens horaire ou antihoraire de parcours de l'environnement 40. Il sera donc considéré que ce sens est connu par les balises ou est communiqué aux balises par tout moyen technique adapté.

Lors d'une étape initiale 110 du procédé de géolocalisation 100 du système 10, les balises 14-1 à 14-M mettent en œuvre l'une des techniques connues pour déterminer leur localisation respective dans l'environnement 40.

Ainsi, par exemple, ces balises peuvent mettre en œuvre la technique de trilatération permettant de localiser l'ensemble des balises en utilisant des mesures de distance entre chaque couple de balises.

La technique de trilatération avec mesures de ranging aller-retour peut être mise en œuvre par exemple en construisant un repère local dans lequel :
- la balise 14-1 est à l'origine du repère ;
- la balise 14-2 est dans le point (x2, 0) où x2 correspond à la distance jusqu'à la balise 14-1 ;
- la balise 14-3 est dans le point (x3, y3) où x3 et y3 sont calculées en prenant en compte le sens de positionnement des balises et la distance de cette balise jusqu'à la balise 14-1 et jusqu'à la balise 14-2.

Les autres balises peuvent se localiser dans ce repère local de manière similaire. Ce repère peut être par ailleurs complété par la troisième dimension lorsque ces balises sont dotées d'un module barométrique.

De plus, dans le cas où au moins deux balises peuvent se localiser de manière absolue, c'est-à-dire dans un repère absolu, les autres balises peuvent également déterminer leur localisation dans un tel repère absolu.

Les localisations des balises ainsi déterminées (relatives ou absolues) sont par exemple mémorisées à la fin de cette étape 110 dans les modules de traitement 22 de ces balises.

Lors de l'étape 120 suivante, les modules de traitement 22 des balises 14-1 à 14-M commandent alors les modules de réception/émission 21 correspondants pour émettre l'information de navigation correspondante avec la même périodicité *T*.

Comme expliqué précédemment, chaque information de navigation inclut notamment la localisation déterminée de la balise correspondante ainsi que l'identifiant de celle-ci.

Ces émissions s'effectuent de manière asynchrone dans la mesure où les horloges 23 des balises 14-1 à 14-M ne sont pas synchronisées entre elles.

Lors de l'étape 130 suivante, le récepteur 12 se localise dans l'environnement 40 en mettant en œuvre le procédé de géolocalisation 200 dont l'organigramme est illustré dans la partie droite de la figure 2.

Ce procédé sera alors désormais expliqué en détail.

Lors de la mise en œuvre de ce procédé, il est considéré que le porteur du récepteur 12 se déplace dans l'environnement 40 selon N positions successives.

Lors de l'étape 210 du procédé, dans chacune des positions successives N du porteur 12, le module de réception 31 du récepteur 12 reçoit les signaux radioélectriques émis par l'ensemble des balises 14-1 à 14-M.

Puis, ce module de réception 31 transmet les signaux reçus au module de traitement 32 qui mesure alors les instants de réception de chacun de ces signaux en utilisant son horloge 33.

Ces mesures seront dénotées par la suite par la notation *TOAᵢⱼ.* Dans cette notation, l'indice *i* varie de 1 à N pour désigner la position correspondante du porteur et l'indice *j* varie entre 1 et M pour désigner la balise à partir de laquelle les signaux correspondants sont reçus. En particulier, chaque valeur de l'indice *j* est associée à l'un des identifiants de l'ensemble des balises 14-1 à 14-M qui est déterminé par le module de traitement 32 en faisant l'extraction de cet identifiant de l'information de navigation des signaux radioélectriques correspondants.

Les mesures *TOAᵢⱼ* sont réalisées avec un bruit de mesure w qui est supposé gaussien d'écart-type *σ* connu et avec un bruit d'instabilité différentielle des horloges *v* qui est supposé négligeable.

Par ailleurs, lors de la même étape, le module de traitement 32 extrait également de chaque information de navigation reçue la localisation de la balise correspondante et l'enregistre par exemple avec la mesure *TOAᵢⱼ* correspondante.

Lors de l'étape 220 suivante, à partir desdites mesures *TOAᵢⱼ,* pour chaque balise *j,* le module de traitement 32 détermine une première estimation d'au moins un paramètre de nuisance relatif à la dérive de l'horloge du récepteur 12 par rapport à l'horloge de cette balise *j*.

Le nombre de paramètres de nuisance est choisi en fonction de la précision des horloges 23, 33 des balises et du récepteur.

En particulier, lorsque les horloges de bonne précision sont utilisées, deux paramètres de nuisance *αⱼ* et *δⱼ* pour chaque balise *j* sont choisis.

Pour ce type d'horloge, le modèle de dérive suivant est utilisé : ${q}_{j} \left(t\right) = {δ}_{j} + {α}_{j} \left(t-{t}_{1}\right) ,$ où
t est l'instant courant et *t*₁ est l'instant initiale.

Pour les horloges de haute précision, le paramètre *α*ⱼ est considéré négligeable et seul le paramètre *δⱼ* est donc choisi.

Par la suite, il sera considéré que deux paramètres de nuisance *αⱼ* et *δⱼ* sont déterminés pour chaque balise *j*.

Pour déterminer ces paramètres, le module de traitement 33 applique un estimateur du maximum de vraisemblance à l'expression suivante : $Q \left(X, {α}_{j}, {δ}_{j}, T\right) = {\sum }_{i = 1}^{N} {{\sum }_{j = 1}^{M} \frac{1}{{σ}^{2}} \left({δ}_{j}+\left(i-1\right)T+\left(i-1\right){Tα}_{j}+\frac{{d}_{ij}}{c}-{TOA}_{ij}\right)}^{2}$
*dᵢⱼ* est la distance entre la balise *j* et le récepteur dans la position *i* qui est également inconnue à ce stade ;
*c* est la vitesse de propagation des signaux radioélectriques dans l'environnement ; et
*X* est le vecteur de positions successives du porteur.

Pour isoler les paramètres *αⱼ* et *δⱼ* le critère appelé « minmax » est appliqué à l'expression *Q.* Autrement dit : $argmin \left(Q, X\right) = argmin \left(Q, X, \left\{{α}_{j}, {δ}_{j}\right\}\right) = {argmin}_{X} \left({min}_{\left\{{α}_{j}, {δ}_{j}\right\}}\left(Q, X, \left\{{α}_{j}, {δ}_{j}\right\}\right)\right) .$

Ce critère permet d'estimer les paramètres de nuisance *αⱼ* et *δⱼ* comme suit : ${δ}_{j} = \frac{- 2 \left(2N-1\right) {v}_{j} + 6 {w}_{j}}{N \left(N+1\right)} ;$ ${α}_{j} = \frac{- 2 \left({v}_{j}+{Nδ}_{j}\right)}{N \left(N-1\right) T} - 1 ;$ avec : ${v}_{j} = {\sum }_{i = 1}^{N} \left(\frac{{d}_{ij}}{c}-{TOA}_{ij}\right) ;$ ${w}_{j} = {\sum }_{i = 1}^{N} i \left(\frac{{d}_{ij}}{c}-{TOA}_{ij}\right) .$

Lors de l'étape 230 mise en œuvre par exemple simultanément avec l'étape 220, le module de traitement 33 détermine pour chaque balise et dans chaque position du récepteur, une deuxième estimation correspondant à l'estimation de la distance *dᵢⱼ* entre cette balise et le récepteur 12 dans cette position.

Ces deuxièmes estimations sont déterminées en utilisant l'estimateur *Q* précité à partir notamment des mesures *TOAᵢⱼ* et des paramètres de nuisance, en utilisant par exemple le critère de moindres carrées.

Puis, lors de l'étape suivante 240, le module de traitement 32 détermine la localisation du récepteur 12 dans au moins l'une des N positions à partir des localisations des balises 14-1, ..., 14-M et les distances *dᵢⱼ* correspondantes.

En particulier, une telle localisation *Pᵢ* = (*xᵢ, yᵢ*) du récepteur dans la position *i* est déterminée en utilisant l'expression suivante : ${d}_{ij} = {\left({Cx}_{j}-{x}_{i}\right)}^{2} + {\left({Cy}_{j}-{y}_{i}\right)}^{2}$ où

*Cⱼ* = (*Cxⱼ, Cyⱼ*) est la localisation bidimensionnelle relative ou absolue de la balise *j*.

Il est donc clair que la localisation *Pᵢ* du récepteur est une localisation relative dans le repère local lorsque les positions *Cⱼ* sont relatives et une localisation absolue dans le repère absolu lorsque les positions *Cⱼ* sont absolues.

La présente invention présente alors un certain nombre d'avantages.

Tout d'abord, l'invention permet de géolocaliser le récepteur dans un environnement contraignant dans lequel la réception des signaux de géolocalisation issus d'un système de géolocalisation externe n'est pas possible ou alors est compliqué.

Pour ce faire, l'invention propose de disposer dans un tel environnement des balises qui se localisent l'une par rapport à l'autre en émettant des signaux comportant leur position de manière périodique.

Le récepteur peut alors recevoir ces signaux pour en déduire sa localisation dans l'environnement et cela sans devoir émettre des signaux en réponse et cela même avec des horloges fonctionnant de manière asynchrone.

## Revendications

1. Procédé de géolocalisation (200) d'un récepteur (12) en déplacement dans un environnement (40) comportant M balises, le nombre M étant supérieur ou égal à 3, chaque balise (14-1, ..., 14-M) étant identifiable par un identifiant et étant apte à émettre périodiquement des signaux radioélectriques transportant une information de navigation comprenant l'identifiant de cette balise (14-1, ..., 14-M) et sa localisation dans l'environnement (40), chacun du récepteur (12) et des M balises (14-1, ..., 14-M) comportant une horloge (23, 33) ;
le procédé (200) comprenant les étapes suivantes :
- dans chacune des N positions successives du récepteur (12) dans l'environnement (40), collecte (210) de M mesures, chaque mesure correspondant à l'instant d'arrivée des signaux radioélectriques transportant l'information de navigation issue de l'une des balises (14-1, ..., 14-M) ;
- à partir desdites mesures, pour chaque balise, détermination (220) d'une première estimation correspondant à l'estimation d'au moins un paramètre de nuisance relatif à la dérive de l'horloge du récepteur (12) par rapport à l'horloge de cette balise (14-1, ..., 14-M) ;
- à partir desdites mesures et desdites premières estimations, pour chaque balise (14-1, ..., 14-M) (12), détermination (230) d'une deuxième estimation correspondant à l'estimation de la distance entre cette balise (14-1, ..., 14-M) et le récepteur (12) dans cette position ;
- détermination (240) de la localisation du récepteur (12) dans au moins l'une des N positions à partir des localisations des balises (14-1, ..., 14-M) et les distances entre ces balises (14-1, ..., 14-M) et le récepteur (12) dans cette position ;
dans lequel les premières et deuxièmes estimations sont déterminées par un estimateur du maximum de vraisemblance ;
et dans lequel les premières estimations sont des fonctions des deuxièmes estimations.

2. Procédé de géolocalisation (200) d'un récepteur (12) selon la revendication 1, dans lequel les balises (14-1, ..., 14-M) sont aptes à émettre lesdits signaux radioélectriques de manière asynchrone avec une même période d'émission.

3. Procédé de géolocalisation (200) d'un récepteur (12) selon la revendication 2, dans lequel l'estimateur est appliqué à l'expression suivante : ${\sum }_{i = 1}^{N} {{\sum }_{j = 1}^{M} \frac{1}{{σ}^{2}} \left({δ}_{j}+\left(i-1\right)T+\left(i-1\right){Tα}_{j}+\frac{{d}_{ij}}{c}-{TOA}_{ij}\right)}^{2}$ où
*TOAᵢⱼ* est une mesure de l'instant d'arrivée des signaux radioélectriques transportant l'information de navigation issue de la balise *j* dans la position *i* du récepteur ;
*dᵢⱼ* est la distance entre la balise *j* et le récepteur dans la position *i* ;
*c* est la vitesse de propagation des signaux radioélectriques dans l'environnement ;
*T* est la période d'émission des signaux radioélectriques par les balises ;
*σ* est un écart-type de bruits desdites mesures ;
*αⱼ* et *δⱼ* sont des paramètres de nuisance relatifs à la dérive de l'horloge du récepteur par rapport à l'horloge de la balise *j*.

4. Procédé de géolocalisation (200) d'un récepteur (12) selon l'une quelconque des revendications précédentes, dans lequel le nombre de paramètres de nuisance de chaque première estimation est choisi en fonction de précision des horloges (23, 33) correspondantes.

5. Procédé de géolocalisation (200) d'un récepteur (12) selon la revendication 4, dans lequel :
- un paramètre de nuisance est choisi lorsque la précision des horloges (23, 33) correspondantes est inférieure à 1 ppb ;
- deux paramètres de nuisance sont choisis lorsque la précision des horloges (23, 33) correspondantes est d'ordre de 10 ppb.

6. Procédé de géolocalisation (200) d'un récepteur (12) selon l'une quelconque des revendications précédentes dans lequel ladite localisation déterminée du récepteur (12) est déterminée par rapport à un repère local défini par les balises (14-1, ..., 14-M) ou par rapport à un repère absolu lorsque les localisations d'au moins deux des M balises (14-1, ..., 14-M) sont déterminées dans ce repère absolu.

7. Procédé de géolocalisation (100) d'un système de géolocalisation (10) comprenant un récepteur (12) mobile dans un environnement (40) et M balises (14-1, ..., 14-M) disposées dans l'environnement (40), le nombre M étant supérieur ou égal à 3, chaque balise (14-1, ..., 14-M) étant identifiable par un identifiant ;
le procédé (100) comprenant les étapes suivantes :
- détermination (110) des localisations respectives des balises (14-1, ..., 14-M) dans l'environnement (40) ;
- émission (120) par chacune des balises (14-1, ..., 14-M) périodiquement des signaux radioélectriques transportant une information de navigation comprenant l'identifiant de cette balise (14-1, ..., 14-M) et sa localisation dans l'environnement ;
- déplacement du récepteur (12) et détermination (130) de sa localisation dans l'environnement par le procédé de géolocalisation (200) selon l'une quelconque des revendications 1 à 6.

8. Récepteur (12) comprenant des moyens techniques configurés pour mettre en œuvre le procédé de géolocalisation (200) selon l'une quelconque des revendications 1 à 6.

9. Système de géolocalisation (10) comprenant un récepteur (12) mobile dans un environnement (40) et M balises (14-1, ..., 14-M) disposées dans l'environnement ;
le système (10) étant configuré pour mettre en œuvre le procédé de géolocalisation (100) selon la revendication 7.

## Patentansprüche

1. Verfahren zur Geolokalisierung (200) eines Empfängers (12), der sich in einer Umgebung (40) bewegt, die M Baken aufweist, wobei die Anzahl M größer oder gleich 3 ist, wobei jede Bake (14-1, ..., 14-M) durch eine Kennung identifizierbar und geeignet ist, periodisch Funksignale zu senden, die eine Navigationsinformation transportieren, die die Kennung dieser Bake (14-1, ..., 14-M) und ihren Standort in der Umgebung (40) umfasst, wobei sowohl der Empfänger (12) als auch die M Baken (14-1, ..., 14-M) jeweils eine Uhr (23, 33) aufweisen;
wobei das Verfahren (200) die folgenden Schritte umfasst:
- Sammeln (210), in jeder der N aufeinanderfolgenden Positionen des Empfängers (12) in der Umgebung (40), von M Messungen, wobei jede Messung dem Zeitpunkt der Ankunft der Funksignale entspricht, die die von einer der Baken (14-1, ..., 14-M) stammende Navigationsinformation transportieren;
- Bestimmen (220), ausgehend von den Messungen, für jede Bake einer ersten Schätzung, die der Schätzung von mindestens einem Störparameter entspricht, der sich auf die Abweichung der Uhr des Empfängers (12) in Bezug auf die Uhr dieser Bake (14-1, ..., 14-M) bezieht;
- Bestimmen (230), ausgehend von den Messungen und den ersten Schätzungen, für jede Bake (14-1, ..., 14-M) (12) einer zweiten Schätzung, die der Schätzung der Entfernung zwischen dieser Bake (14-1, ..., 14-M) und dem Empfänger (12) an dieser Position entspricht;
- Bestimmen (240) des Standorts des Empfängers (12) an mindestens einer der N Positionen ausgehend von den Standorten der Baken (14-1, ..., 14-M) und der Abstände zwischen diesen Baken (14-1, ..., 14-M) und dem Empfänger (12) an dieser Position;
wobei die ersten und zweiten Schätzungen durch einen Maximum-Likelihood-Schätzer bestimmt werden;
und wobei die ersten Schätzungen Funktionen der zweiten Schätzungen sind.

2. Verfahren zur Geolokalisierung (200) eines Empfängers (12) nach Anspruch 1, wobei die Baken (14-1, ..., 14-M) geeignet sind, die Funksignale asynchron mit einer gleichen Sendeperiode zu senden.

3. Verfahren zur Geolokalisierung (200) eines Empfängers (12) nach Anspruch 2, wobei der Schätzer auf den folgenden Ausdruck angewendet wird: ${Σ}_{i = 1}^{N} {Σ}_{j = 1}^{M} 1 \frac{1}{{σ}^{2}} {\left({δ}_{j}+\left(i-1\right)T+\left(i-1\right){Tα}_{j}+\frac{{d}_{ij}}{c}-{TOA}_{ij}\right)}^{2}$ wobei
*TOAij* eine Messung des Zeitpunkts der Ankunft der Funksignale ist, die die Navigationsinformationen von der Bake *j* an der Position *i* des Empfängers transportieren;
*dᵢⱼ* die Entfernung zwischen der Bake *j* und dem Empfänger an der Position *i* ist;
*c* die Ausbreitungsgeschwindigkeit der Funksignale in der Umwelt ist;
*T* die Sendeperiode der Funksignale durch die Baken ist;
*σ* die Standardabweichung des Rauschens der Messungen ist;
*αⱼ* und *δⱼ* Störparameter sind, die sich auf die Abweichung der Uhr des Empfängers in Bezug auf die Uhr der Bake *j* beziehen.

4. Verfahren zur Geolokalisierung (200) eines Empfängers (12) nach einem der vorhergehenden Ansprüche, wobei die Anzahl der Störparameter jeder ersten Schätzung in Abhängigkeit von der Genauigkeit der entsprechenden Uhren (23, 33) gewählt wird.

5. Verfahren zur Geolokalisierung (200) eines Empfängers (12) nach Anspruch 4, wobei:
- ein Störparameter ausgewählt wird, wenn die Genauigkeit der entsprechenden Uhren (23, 33) unter 1 ppb liegt;
- zwei Störparameter ausgewählt werden, wenn die Genauigkeit der entsprechenden Uhren (23, 33) in der Größenordnung von 10 ppb liegt.

6. Verfahren zur Geolokalisierung (200) eines Empfängers (12) nach einem der vorhergehenden Ansprüche, wobei der ermittelte Standort des Empfängers (12) in Bezug auf ein lokales Koordinatensystem, das durch die Baken (14-1, ..., 14-M) definiert ist, oder in Bezug auf ein absolutes Koordinatensystem bestimmt wird, wenn die Standorte von mindestens zwei der M Baken (14-1, ..., 14-M) in diesem absoluten Koordinatensystem bestimmt werden.

7. Verfahren zur Geolokalisierung (100) eines Geolokalisierungssystems (10), das einen Empfänger (12) umfasst, der in einer Umgebung (40) mobil ist, und M Baken (14-1, ..., 14-M), die in der Umgebung (40) angeordnet sind, wobei die Anzahl M größer oder gleich 3 ist, wobei jede Bake (14-1, ..., 14-M) durch eine Kennung identifizierbar ist;
wobei das Verfahren (100) die folgenden Schritte umfasst:
- Bestimmen (110) der jeweiligen Standorte der Baken (14-1, ...,14-M) in der Umgebung (40);
- periodisches Senden (120) durch jede der Baken (14-1, ..., 14-M) von Funksignalen, die Navigationsinformationen transportieren, die die Kennung dieser Bake (14-1, ..., 14-M) und ihren Standort in der Umgebung umfassen;
- Bewegen des Empfängers (12) und Bestimmen (130) seines Standorts in der Umgebung durch das Geolokalisierungsverfahren (200) nach einem der Ansprüche 1 bis 6.

8. Empfänger (12), der technische Mittel umfasst, die zur Durchführung des Geolokalisierungsverfahrens (200) nach einem der Ansprüche 1 bis 6 konfiguriert sind.

9. Geolokalisierungssystem (10), umfassend einen Empfänger (12), der in einer Umgebung (40) mobil ist, und M Baken (14-1, ..., 14-M), die in der Umgebung angeordnet sind;
wobei das System (10) zur Durchführung des Geolokalisierungsverfahrens (100) nach Anspruch 7 konfiguriert ist.

## Claims

1. Geolocation method (200) for a receiver (12) moving in an environment (40) comprising M beacons, the number M being greater than or equal to 3, each beacon (14-1, ..., 14-M) being identifiable by an identifier and capable of periodically transmitting radio signals carrying navigation information comprising the identifier of that beacon (14-1, ..., 14-M) and its location in the environment (40), each of the receiver (12) and the M beacons (14-1, ..., 14-M) having a clock (23, 33);
the method (200) comprising the following steps:
- in each of the N successive positions of the receiver (12) in the environment (40), collection (210) of M measurements, each measurement corresponding to the time of arrival of the radio signals carrying the navigation information from one of the beacons (14-1, ..., 14-M);
- from the said measurements, for each beacon, determination (220) of a first estimate corresponding to the estimate of at least one nuisance parameter relating to the deviation of the clock of the receiver (12) with respect to the clock of this beacon (14-1, ..., 14-M);
- on the basis of the said measurements and the said first estimates, for each beacon (14-1, ..., 14-M) (12), determination (230) of a second estimate corresponding to the distance between that beacon (14-1, ..., 14-M) and the receiver (12) in that position;
- determination (240) of the location of the receiver (12) in at least one of the N positions from the locations of the beacons (14-1, ..., 14-M) and the distances between these beacons (14-1, ..., 14-M) and the receiver (12) in that position;
where the first and second estimates are determined by a maximum likelihood estimator;
and in which the first estimates are functions of the second estimates.

2. Geolocation method (200) for a receiver (12) according to claim 1, in which the beacons (14-1, ..., 14-M) are able to transmit the said radio signals asynchronously with the same transmission period.

3. Geolocation method (200) for a receiver (12) according to claim 2, in which the estimator is applied to the following expression: ${Σ}_{i = 1}^{N} {Σ}_{j = 1}^{M} 1 \frac{1}{{σ}^{2}} {\left({δ}_{j}+\left(i-1\right)T+\left(i-1\right){Tα}_{j}+\frac{{d}_{ij}}{c}-{TOA}_{ij}\right)}^{2}$ where
*TOAᵢⱼ* is a measurement of the time of arrival of the radio signals carrying the navigation information from beacon *j* in the receiver's position *i;*
*dᵢⱼ* is the distance between beacon *j* and the receiver in position *i;*
*c* is the propagation speed of the radio signals in the environment;
*T* is the period of transmission of the radio signals by the beacons;
*σ* is a standard deviation of the noise of said measurements;
*αⱼ* and *δⱼ* are nuisance parameters relating to the deviation of the receiver's clock with respect to the clock of beacon *j*.

4. Geolocation method (200) for a receiver (12) according to any one of the preceding claims, in which the number of nuisance parameters of each first estimate is chosen as a function of the accuracy of the corresponding clocks (23, 33).

5. Geolocation method (200) for a receiver (12) according to claim 4, in which:
- a nuisance parameter is chosen when the accuracy of the corresponding clocks (23, 33) is less than 1 ppb;
- two nuisance parameters are chosen when the accuracy of the corresponding clocks (23, 33) is in the region of 10 ppb.

6. Geolocation method (200) for a receiver (12) according to any one of the preceding claims, in which the said location of the receiver (12) is determined with respect to a local reference frame defined by the beacons (14-1, ..., 14-M) or with respect to an absolute reference frame when the locations of at least two of the M beacons (14-1, ..., 14-M) are determined within this absolute reference frame.

7. Geolocation method (100) for a geolocation system (10) comprising a mobile receiver (12) in an environment (40) and M beacons (14-1, ..., 14-M) arranged in the environment (40), the number M being greater than or equal to 3, each beacon (14-1, ..., 14-M) being identifiable by an identifier;
the method (100) comprising the following steps:
- determination (110) of the respective locations of the beacons (14-1, ..., 14-M) in the environment (40);
- each beacon (14-1, ..., 14-M) periodically transmits radio signals (120) carrying navigation information, including the identifier of that beacon (14-1, ..., 14-M) and its location in the environment;
- movement of the receiver (12) and determination (130) of its location in the environment by the geolocation method (200) according to any one of claims 1 to 6.

8. Receiver (12) comprising technical means configured to implement the geolocation method (200) according to any one of claims 1 to 6.

9. Geolocation system (10) comprising a mobile receiver (12) in an environment (40) and M beacons (14-1, ..., 14-M) arranged in the environment;
the system (10) being configured to implement the geolocation method (100) according to claim 7.
